# EUROPÄISCHE PATENTSCHRIFT

(11) **EP 2 134 520 B1**
(45) Veröffentlichungstag und Bekanntmachung des Hinweises auf die Patenterteilung: **16.05.2012**
(21) Anmeldenummer: 08734867.8
(22) Anmeldetag: 28.03.2008
(51) Int. Cl.: B28B 13/04, B65G 25/02, B65G 57/32

(54) **VORRICHTUNG ZUM TRANSPORTIEREN UND RÜTTELN VON FORMLINGEN**
METHOD FOR TRANSPORTING AND SHAKING BLANKS
DISPOSITIF DE TRANSPORT ET DE SECOUAGE DE BLOCS

(30) Priorität: 05.04.2007 DE 102007016803
(43) Veröffentlichungstag der Anmeldung: 23.12.2009
(73) Patentinhaber: Rekers Gmbh Maschinen- Und Anlagenbau, 48480 Spelle (DE)
(72) Erfinder: FOPPE, Norbert, 48480 Spelle (DE)
(74) Vertreter: GROSSE SCHUMACHER KNAUER VON HIRSCHHAUSEN
(86) Internationale Anmeldenummer: PCT/EP2008/002495
(87) Internationale Veröffentlichungsnummer: WO 2008/122376

(56) Entgegenhaltungen:
- DE-A1- 19 813 868
- DE-C- 945 825
- DE-U- 1 900 544
- DE-U- 6 911 956

## Beschreibung

Die Erfindung bezieht sich auf eine Vorrichtung zum Transportieren und Rütteln von auf Paletten oder dgl. Stützkörpern abgestützten Formlingen, insbesondere von Steinformlingen, mit einer einen Rütteltisch aufweisenden Rüttelstation, mit einem der Rüttelstation in Transportrichtung der Formlinge vorgeordneten Zuförderer und einem der Rüttelstation in Transportrichtung der Formlinge nachgeordneten Abförderer, wobei der Zuförderer und der Abförderer jeweils einen anhebbaren und absenkbaren, translatorisch über jeweils einen Antrieb hin- und her bewegbaren Transportrahmen zum Weitertransport der Paletten aufweisen.

Vorrichtungen der vorgenannten Art herkömmlicher Bauart (vgl. z.B. DE-A-198 13 868) haben Transportrahmen, Zuförderer und Abförderer, die im Bereich des Rütteltisches für den Transport der Paletten zu dem Rütteltisch (Zuförderer) und den Weitertransport der noch nassen, aber schon gerüttelten Formlinge zu weiteren Fertigungsschritten und zur Lagerung verantwortlich sind. Dabei ist eine vorgegebene Anzahl von Paletten zu transportieren, die in die Fertigung einbezogen sind. Die Transportrahmen werden von einem Antrieb hin und her bewegt, und zwar derart, daß sie um ein bestimmtes Transportrastermaß in Transportrichtung der Formlinge bewegt werden, dann für eine Rücktransportbewegung entgegen die Transportrichtung der Formlinge abgesenkt werden können und dann in der nachfolgenden Bewegung in Transportrichtung die Paletten wieder anheben und gegenüber einem statischen Rahmen weiter transportieren. Einer solchen Vorrichtung ist eine bestimmte Anzahl von Paletten zugeordnet. Die Transportrastermaße der hin- und her bewegten Transportrahmen sowohl des Zuförderers als auch des Abförderers sind gleich, um kontinuierlich transportieren und rütteln zu können.

In vielen Einsatzfällen ist jedoch die der Vorrichtung zugeordnete Anzahl der Paletten zu groß, so daß beispielsweise nur jede zweite Palette mit Formlingen zu bestücken ist. Das führt bei den herkömmlichen Vorrichtungen dazu, daß die zukünftigen Leerpaletten dem System zu entnehmen und für einen späteren Gebrauch zwischenzulagern sind. Der damit einhergehende Aufwand ist jedoch groß. Wird bei herkömmlichen Vorrichtungen dieser Aufwand eingespart, ist die Hälfte der transportierten Paletten leer mitzuführen und den angegliederten Lagerungsstellen zuzuführen. Das bindet unnötig Lagerkapazität.

Es ist Aufgabe der vorliegenden Erfindung, eine Vorrichtung zum Transportieren und Rütteln von auf Paletten oder dgl. Stützkörper abgestützter Formlinge der eingangs genannten Art derart weiterzubilden, daß nicht benötigte Paletten so zu handhaben sind, daß diese unter die Palette einer bestückten anderen Palette zu bringen ist, ohne daß das Risiko der Beschädigung von auf dieser Palette abgestützten Formlingen besteht.

Zur Lösung dieser Aufgabe zeichnet sich die Vorrichtung der eingangs genannten Art dadurch aus, daß die Antriebe der Transportrahmen des Zuförderers und des Abförderers auf ein gleiches Transportrahmenrastermaß und ein Transportrahmenrastermaß im Verhältnis von 2:1 zueinander einstellbar sind und daß an dem Transportrahmen des Abförderers in seinem der Rüttelstation benachbarten Bereichen ein seine Abstellfläche für eine Palette erhöhender Aufsatz mit einer in etwa mit der Abstellfläche des Rütteltisches der Rüttelstation fluchtenden Aufsatzhöhe vorsehbar ist.

Damit ist eine Vorrichtung zum Transportieren und Rütteln von auf Paletten oder dgl. Stützkörpern abgestützten Formlingen geschaffen, bei der mit großer Sicherheit gegen eine Beschädigung der Formlinge eine Leerpalette unter eine mit Formlingen bestückte Palette zu schieben ist. Ist die volle Palette auf eine leere Palette im Bereich des Abförderers geschoben, ist bei der späteren Lagerhaltung nicht unnötig Kapazität gebunden. Bei einer weiteren Fortbewegung ist noch der zusätzliche Vorteil vorhanden, daß die Formlinge von zwei Paletten getragen werden, so daß auch im Fall des Anhebens die Durchbiegungsneigung dieser Paletten verringert ist. Damit ist die Gefahr der Haarrißbildung in Formlingen verringert. Wesentlich ist auch, daß durch den Aufsatz eine derartige Abstellflächenhöhe an dem Tragrahmen des Abförderers einzustellen ist, daß die Abstellfläche des Tragrahmens des Abförderers mit der Abstellfläche des Rütteltisches fluchtet. Die sich daran anschließende Abstellfläche des Tragrahmens des Abförderers ist mit einem geringerem Höhenmaß vorgesehen und orientiert sich daran, wie hoch eine Palette und ein etwa noch auf einer unteren Palette anzuordnenden Ziehblech gestaltet ist, und zwar derart, daß die Höhe einer unteren Palette mit darauf angeordnetem Ziehblech oder aber auch ohne Ziehblech wiederum mit dem Aufsatz fluchtet, wonach sichergestellt ist, daß ohne Höhendifferenzen die eine Palette auf die andere im Bereich des Abförderers geschoben werden kann.

Um zu bewerkstelligen, daß ein kontinuierlicher Betrieb auch bei der vorzunehmenden Doppelung der Paletten durchgeführt werden kann, sind die Antriebe des Transportrahmens des Zuförderers und der Antrieb des Transportrahmens des Abförderers einstellbar ausgebildet und zwar derart, daß im Falle der Doppelung der Paletten zueinander ein Transportrastermaß im Verhältnis von 2:1 eingestellt werden kann. Dies bedeutet, daß der Transportrahmen des Zuförderers eine in Transportrichtung ausgerichtete translatorische Bewegung in Transportrichtung durchführt, die doppelt so groß ist wie die in gleicher Richtung weisende Transportbewegung des Transportrahmens des Abförderers. In der Praxis ist beispielsweise ein Rastermaß von 2700 mm Bewegungslänge in Richtung des Rütteltisches der Rüttelstation des Tragrahmens des Zuförderers eingestellt, wohingegen der Tragrahmen des Abförderers bei einem solchen Takt nur eine Bewegungslänge und damit ein Transportrastermaß von 1350 mm hat.

Soll die Vorrichtung so betrieben werden, daß die Paletten nicht gedoppelt werden, ist der Aufsatz zu entnehmen und insbesondere dem Transportrahmen des Abförderers in der nachfolgenden Position dem statischen Rahmen hinzuzufügen bzw. kann auch bei einer anderen Ausführungsvariante abgesenkt werden, so daß sich bei dem Transportrahmen des Abförderers von der Höhe her wiederum ein Niveau einstellen läßt, das berücksichtigt, daß jede Palette mit Formlingen bestückt wird. Die Transportrastermaße der Transportrahmen des Zuförderers und des Abförderers sind dann über die Antriebe auch so eingestellt, daß sie einander entsprechen und zum Beispiel 1350 mm betragen.

Hinsichtlich weiterer vorteilhafter Ausgestaltungen wird auf weitere Unteransprüche, die nachfolgende Beschreibung und die Zeichnung verwiesen. In der Zeichnung zeigen:
- Fig. 1: eine Seitenansicht auf ein Ausführungsbeispiel einer Vorrichtung zum Transportieren und Rütteln des Formlings auf Paletten,
- Fig. 2: eine Ansicht gemäß der Schnittlinie A-A in Fig. 1,
- Fig. 3: eine schematische Ausführungsbeispiel des Abförderers A in einer Seitenansicht,
- Fig. 3a: eine zur Fig. 3 analoge Darstellung eines alternativen Ausführungsbeispiels,

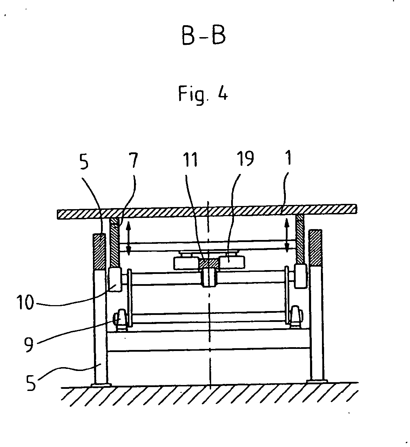

- Fig. 4: eine Ansicht gemäß der Schnittlinie B-B in Fig. 3, und
- Fig. 5: eine Ansicht gemäß der Linie C-C in Fig. 3.

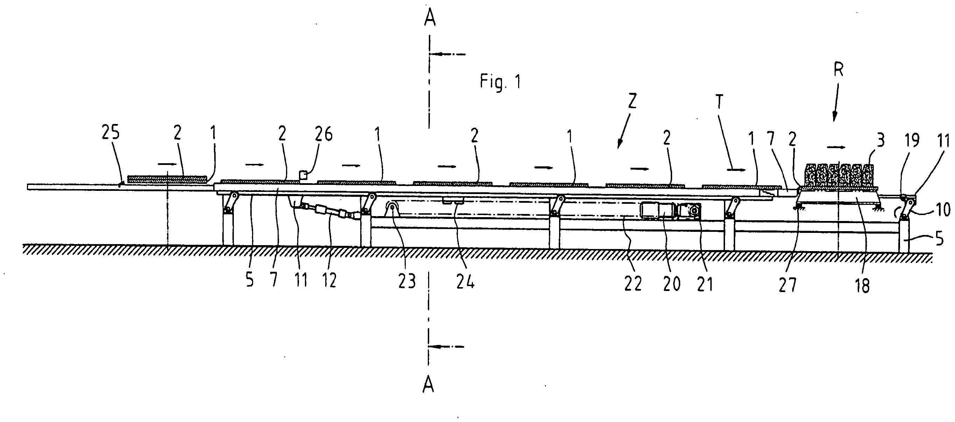

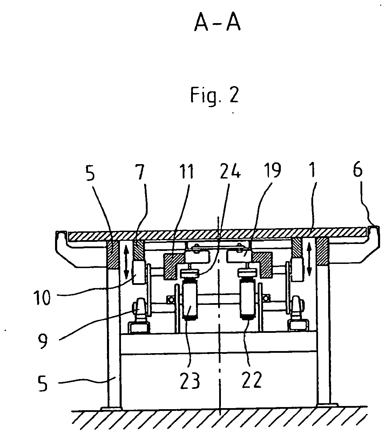

Fig. 1 zeigt die Vorrichtung im Bereich des Zuförderers Z, der in Transportrichtung T der Rüttelstation R vorgeordnet ist. Der Zuförderer Z hat einen Rahmen 5 (Fig. 2), an den Palettenführungen 6 angeordnet sind, die die Palette 1 bzw. 2 an deren Seitenkanten mit einem Abstandsmaß begrenzen. Der Rahmen 5 erstreckt sich zu beiden Seiten unterhalb der Palette 1 bzw. 2. Zusätzlich zu diesem Rahmen ist ein Transportrahmen 7 an beiden Seiten vorgesehen. Dieser Transportrahmen 7 ist mittels eines Fahrantriebes 20 und eines über eine Antriebsrolle 21 geführten Antriebsriemen 22 über die Befestigung 24 anzutreiben, und zwar dergestalt, daß er hin- und her bewegt wird. Dazu ist noch eine weitere Umlenkrolle 23 vorgesehen. Um die translatorische Hin-und Herbewegung zu bewerkstelligen, sind Hubschwingen 10 vorgesehen, die oberseitig jeweils eine Rolle tragen, die unter den Transportrahmen 7 drückt. Die gegenüberliegend angeordneten Hubschwingen 10 sind über eine Zugstange 11 mit einander verbunden, wobei über einen Hubzylinder 12 (Fig. 1) diese Hubstange zu betätigen ist zwecks Verstellung der entsprechenden Hubschwingen. Über die Hubschwingen 10 ist der Transportrahmen 7 anzuheben und kann sich dann relativ zu dem Rahmen 5 in Transportrichtung bewegen, bis eine entsprechende Palette 1 bzw. 2 auf dem Rütteltisch 18, der bei 27 abgestützt ist, abgelegt werden kann. Die Länge der Vorschubbewegung während eines Taktes, also die Hinbewegung in Transportrichtung T der Vorrichtung, wird nachfolgend auch als Transportrastermaß bezeichnet und ist über den Motor 20 einzustellen. Dies ist ein Transportrastermaß, mit dem eine Palette auf dem Rütteltisch 18 abgelegt wird aus ihrer vorherigen Positionierung als Palette vor dem Rütteltisch 18. Der Transportrahmen hat an seinem vorderen Ende eine vorstehende Platte, mit der eine Palette vom Rütteltisch geschoben werden kann. Dazu ist der Rütteltisch 18 mit entsprechenden Öffnungen ausgestattet, die von den Teilen des Transportrahmens 7 durchgriffen werden können, so daß eine fertig gerüttelte Palette 1 bzw. 2 mit den Formlingen 3 während einer Transportbewegung des Transportrahmens 7 vom Rütteltisch geschoben und an den nachfolgend noch näher beschriebenen Abförderer (A) weitergegeben wird. Vorne am Tragrahmen 7 ist noch eine Führungsrolle 19 vorgesehen und im hinteren Bereich ein Schnapper 25 und ein Palettenanschlag 26. Über diesen Palettenanschlag 26 lassen sich aufeinanderliegende (doppelte Paletten) so von einander trennen, so daß sich aufeinanderliegende Paletten 1 und 2 (links in Fig. 1 dargestellt) wieder vereinzeln lassen. Im dargestellten Ausführungsbeispiel soll das Transportrastermaß des Zuföderers Z auf 2700 mm eingestellt sein.

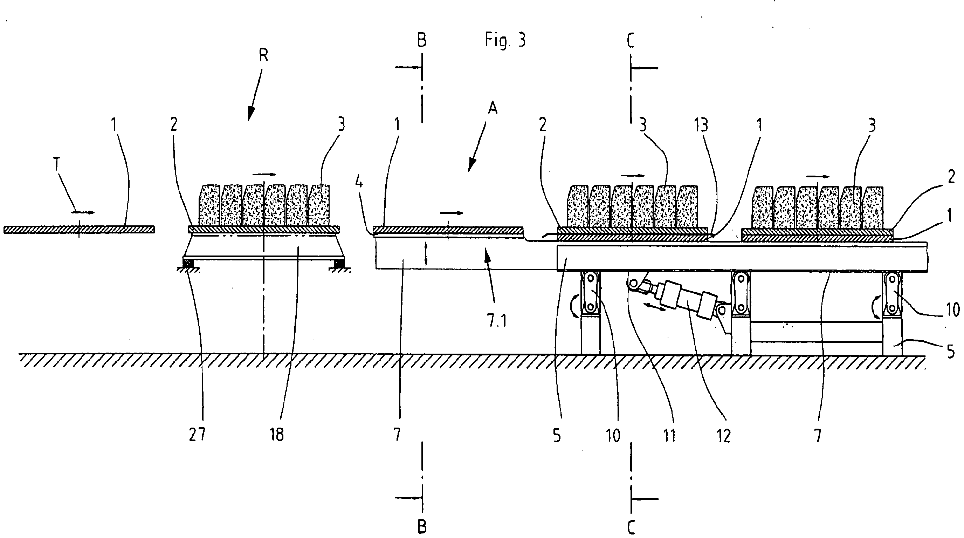

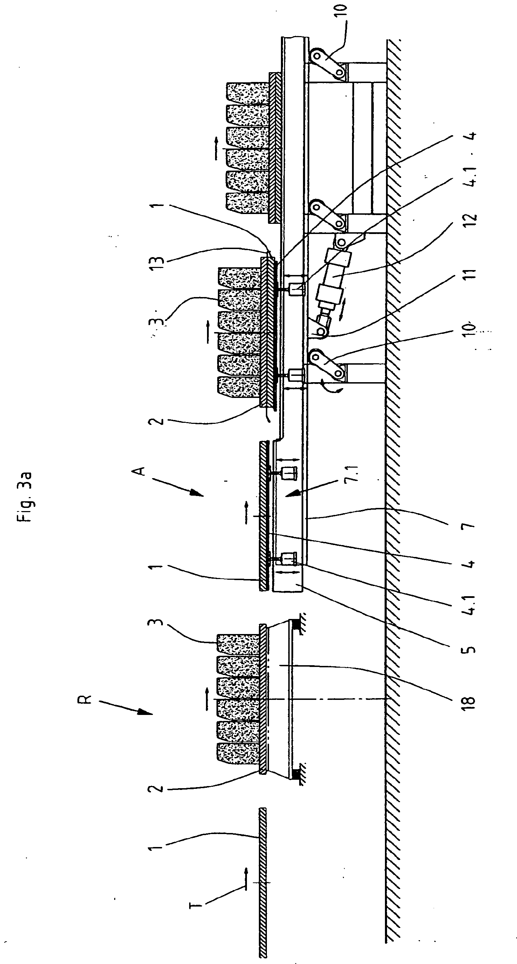

Fig. 3 und Fig. 3a zeigen Ausführungsbeispiele eines Abförderers A der Vorrichtung nach der Erfindung. Auch hier sind wiederum gleichwirkende Teile genauso beziffert wie beim Zuförderer Z. Im vorderen Bereich des Abförderers A wird eine Palette 2 auf die nicht mit Formlingen 3 belegte Palette 1 aufgeschoben. Um dies kontinuierlich ohne Unterbrechung und ohne Anheben einer Palette bewerkstelligen zu können, hat die vorliegende Erfindung Maßnahmen geschaffen, mit denen die mit Formlingen 3 versehene Palette 2 während des kontinuierlichen Betriebes auf die Palette 1 aufgeschoben werden kann, ohne angehoben zu werden. Ein Anheben könnte bei den Formlingen 3, da sie sich noch im Naßzustand befinden, z.B. Haarrisse verursachen, was zu schweren Qualitätsverlusten der fertigen Steine führen würde. Ansonsten ist der Tragrahmen 7 wiederum auf und ab zu bewegen über Schwingen 10, den Hub- bzw. Druckzylinder 12 und eine Zug- oder Schubstange 11. Desweiteren ist der statische Rahmen 5 vorgesehen, auf dem die Paletten abzustellen sind, wenn der Tragrahmen 7 abgesenkt wird und in seine Ausgangsposition zurückverfahren wird für einen nachfolgenden Transporthub. In der in Fig. 3 gezeigten Stellung der Hubschwingen 10 ist der Transportrahmen 7 angehoben in seiner höchsten Lage (12-Uhr-Stellung der Hubschwingen 10).

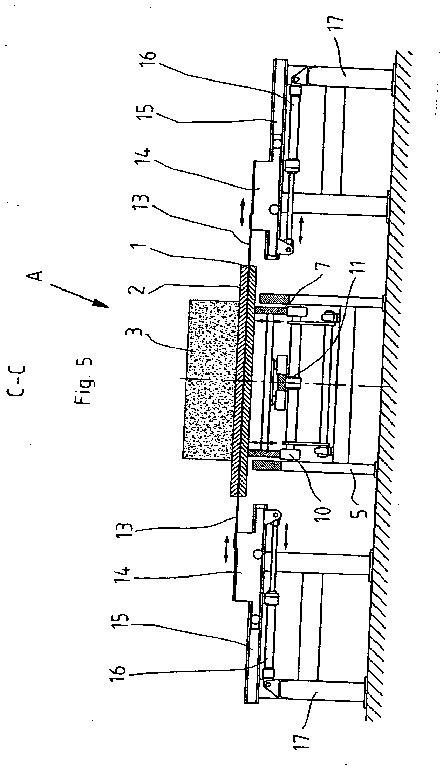

In Fig. 3a dagegen ist angedeutet, daß der Transportrahmen 7 abgesenkt ist (14-Uhr Stellung der Hubschwingen 10). Nicht näher dargestellt sind die Teile des Zuförderers, die den Rütteltisch 18 durchgreifen und die auf den Rütteltisch bearbeiteten Formlinge bzw. eine Leerpalette 1 bis hin in die Position schieben, die in dem den Rütteltisch 18 benachbarten Bereich 7.1 gelegen ist. Dies ist die Palette 1 zu Beginn der Strecke des Abförderers A. Der Transportrahmen 7 ist in diesen dem Rütteltisch 18 benachbarten Bereich mit einem Aufsatz 4 in Gestalt einer Gleitkufe (Fig. 3) oder mit einem Aufsatz 4 mit darunter befindlichen Hubzylindern 4.1 versehen (Fig. 3a). Dieser Aufsatz 4 bzw. der Aufsatz zusammen mit den Hubzylindern 4.1 sind so ausgebildet bzw. eingestellt, daß die Aufsatzhöhe mit der Höhe des Tisches des Rütteltisches 18 fluchtet, so daß die auf dem Rütteltisch in den Darstellungen dargestellte Palette 2 bei einem nachfolgenden Ausschubhub des Zuförderers Z in diesen Bereich 7.1 verschoben wird, wobei gleichzeitig die dort befindliche Palette 1 in die Position verbracht wird, die in Transportrichtung und damit in der Zeichnung rechts daneben gelegen ist, wo in der Zeichnung die zweite Palette ersichtlich ist. Der darauf folgende Hub kann dann die in der Zeichnung ersichtliche Palette 2 des Rütteltisches 18 über den Aufsatz 4 aus Fig. 3 bzw. 3a aufgrund des Höhenunterschiedes direkt auf die Palette 1 schieben. Zuvor ist über seitliche Zuführvorrichtungen (Fig. 5) noch ein Ziehblech 13 einzubringen. Die Zuführungseinrichtung weist einen Schlitten 14, eine Führung 15 und einen Hubzylinder 16 auf und ist zu beiden Seiten des Abförderers A angeordnet.

Die Doppelung der Paletten ist bei der erfindungsgemäßen Vorrichtung außerordentlich einfach und in den Rüttel- und Transportprozeß automatisiert vorzunehmen. Das Transportrastermaß des Abförderers A ist von dem dortigen Antrieb auf die Hälfte des Transportrastermaßes des Zuförderers eingestellt, im Beispiel auf 1350 mm. Dieses Transportrastermaß von z.B. 1350 mm wird auch am Zuförderer Z eingestellt, wenn alle Paletten 1, 2 mit Formlingen 3 bestückt werden.

## Patentansprüche

1. Vorrichtung zum Transportieren und Rütteln von auf Paletten (1, 2) od. dgl. Stützkörpern abgestützten Formlingen (3), insbesondere von Steinformlingen, mit einer einen Rütteltisch (18) aufweisenden Rüttelstation (R), mit einem der Rüttelstation (R) in Transportrichtung (T) der Formlinge (3) vorgeordneten Zuförderer (Z) und einem der Rüttelstation (R) in Transportrichtung (T) der Formlinge (3) nachgeordneten Abförderer (A), wobei der Zuförderer (Z) und der Abförderer (A) jeweils einen anhebbaren und absenkbaren, translatorisch über jeweils einen Antrieb (20) hin- und her bewegbaren Transportrahmen (7) zum Weitertransport der Paletten (1, 2) aufweisen, **dadurch gekennzeichnet, daß** die Antriebe (20) der Transportrahmen (7) des Zuförderers (Z) und des Abförderers (A) auf ein gleiches Transportrahmenrastermaß und ein Transportrahmenrastermaß im Verhältnis von 2:1 zueinander einstellbar sind und daß an dem Transportrahmen (7) des Abförderers (A) in seinem der Rüttelstation (R) benachbarten Bereich ein seine Abstellfläche für eine Palette (1, 2) erhöhender Aufsatz (4, 4.1) mit einer zumindest in etwa mit der Oberfläche des Rütteltisches fluchtenden Abstellfläche vorsehbar ist.

2. Vorrichtung nach Anspruch 1, **dadurch gekennzeichnet, daß** der Antrieb (20) des Transportrahmens (7) des Zuförderers (Z) auf ein Transportrahmenrastermaß von 2700 mm einstellbar ist, während der Antrieb (20) des Transportrahmens (7) des Abförderers (A) auf ein Transportrahmenrastermaß von 1350 mm einstellbar ist.

3. Vorrichtung nach Anspruch 1 oder 2, **dadurch gekennzeichnet, daß** der Aufsatz (4) an dem Transportrahmen (7) des Abförderers (A) demontierbar vorgesehen ist und insbesondere für das Transportrastermaß von 1350 mm in die folgende Absetzposition für die Palette montierbar ist.

4. Vorrichtung nach einem der Ansprüche 1 bis 4, **dadurch gekennzeichnet, daß** der Aufsatz (4) zwei- oder mehrteilig ausgebildet ist und eine Hubvorrichtung (4.1) umfaßt.

5. Vorrichtung nach Anspruch 4, **dadurch gekennzeichnet, daß** die Hubvorrichtung (4.1) Hubzylinder aufweist.

6. Vorrichtung nach einem der Ansprüche 1 bis 5, **dadurch gekennzeichnet, daß** die Transportrahmen (7) des Zuförderers (Z) und des Abförderers (A) durch Ihre Antriebe (20) kontinuierlich und/oder unabhängig von einander antreibbar sind.

7. Vorrichtung nach einem der Ansprüche 1 bis 6, **dadurch gekennzeichnet, daß** die Transportrahmen (7) des Zuförderers (Z) und des Abförderers (A) unabhängig voneinander auf- und absenkbar sind.

8. Vorrichtung nach einem der Ansprüche 1 bis 7, **dadurch gekennzeichnet, daß** der Transportrahmen (7) des Zuförderers (Z) und/oder der Transportrahmen des Abförderers (A) über an einem Vorrichtungshauptgestell schwenkbeweglich abgestützte Schwingen (10) auf- und absenkbar sind.

9. Vorrichtung nach Anspruch 8, **dadurch gekennzeichnet, daß** die Schwingen (10) über zumindest einen Hubzylinder (12) in verschiedene Schwenkstellungen überführbar sind.

10. Vorrichtung nach einem der Ansprüche 1 bis 9, **dadurch gekennzeichnet, daß** dem Abförderer (A) zumindest eine Zuführvorrichtung zur Zwischenanordnung eines Ziehbleches (13) zwischen zwei übereinandergelegene Paletten (1, 2) zugeordnet ist.

11. Vorrichtung nach Anspruch 10, **dadurch gekennzeichnet, daß** die Zuführvorrichtung einen Schlitten (14), eine Schlittenführung (15) und einen Hubzylinder (16) aufweist.

12. Vorrichtung nach einem der Ansprüche 1 bis 11, **dadurch gekennzeichnet, daß** neben dem Transportrahmen (7) ein statischer Rahmen (5) vorgesehen ist, auf dem die Paletten (1, 2) während einer Bewegung der Transportrahmen (7) entgegen der Transportrichtung der Paletten (1, 2) absetzbar sind.

13. Vorrichtung nach Anspruch 12, **dadurch gekennzeichnet, daß** an dem statischen Rahmen (5) eine Palettenführung (6) vorgesehen ist.

14. Vorrichtung nach einem der Ansprüche 1 bis 13, **dadurch gekennzeichnet, daß** an dem Transportrahmen (7) ein Rollenkörper einer Schwinge (10) zum Absenken und Anheben des Transportrahmens (7) angreift.

## Claims

1. Apparatus for transporting and shaking moulded products (3), particularly moulded blocks, supported on pallets (1, 2) or similar support bodies, particularly moulded blocks, including a shaking station (R) including a shaking table (18) a supply conveyer (Z) arranged before the shaking station (R) in the transport direction (T) of the moulded products (3) and a discharge conveyer (A) arranged after the shaking station (R) in the transport direction (T) of the moulded products (3), wherein the supply conveyer (Z) and the discharge conveyer (A) include a respective transport frame (7) for the transport of the pallets (1, 2) which is raisable and lowerable and is movable back and forth in translation by means of a respective actuator (20), **characterised in that** the actuators (20) of the transport frames (7) of the supply conveyer (Z) and the discharge conveyer (A) are adjustable to the same transport frame modular dimension and a transport frame modular dimension in the ratio 2:1 to one another and that providable on the transport frame (7) of the discharge conveyer (A) in its region adjacent to the shaking station (R) there is a support (4, 4.1) which increases its receiving area for a pallet (1, 2) with a receiving surface which is at least approximately in alignment with the surface of the shaking table.

2. Apparatus claimed in claim 1, **characterised in that** the actuator (20) of the transport frame (7) of the supply conveyer (Z) is adjustable to a transport frame modular dimension of 2700 mm whilst the actuator (20) of the transport frame (7) of the discharge conveyer (A) is adjustable to a transport frame modular dimension of 1350 mm.

3. Apparatus claimed in claim 1 or 2, **characterised in that** the support (4) is demountably provided on the transport frame (7) of the discharge conveyer (A) and is mountable, particularly for the transport modular dimension of 1350 mm, in the subsequent deposition position for the pallet.

4. Apparatus claimed in one of claims 1 to 4, **characterised in that** the support (4) is of two parts or multipart construction and includes a lifting device (4.1).

5. Apparatus claimed in claim 4, **characterised in that** the lifting device (4.1) includes lifting cylinders.

6. Apparatus claim in one of claims 1 to 5, **characterised in that** the transport frames (7) of the supply conveyer (Z) and of the discharge conveyer (A) are drivable by their actuators (20) continuously and/or independently of one another.

7. Apparatus claim in one of claims 1 to 6, **characterised in that** the transport frames (7) of the supply conveyer (Z) and the discharge conveyer (A) are raisable and lowerable independently of one another.

8. Apparatus claim in one of claims 1 to 7, **characterised in that** the transport frame (7) of the supply conveyer (Z) and/or the transport frame of the discharge conveyer (A) are raisable and lowerable by means of pivotal links (10) pivotally supported on a main frame of the apparatus.

9. Apparatus claimed in claim 8, **characterised in that** the pivotal links (10) are movable into different pivotal positions by means of at least one lifting cylinder (12).

10. Apparatus claims in one of claims 1 to 9, **characterised in that** associated with the discharge conveyer (A) there is at least one supply device for interposing a pulling plate (13) between two pallets (1, 2) placed above one and another.

11. Apparatus claimed in claim 10, **characterised in that** the supply device includes a carriage (14), a carriage guide (15) and a lifting cylinder (16).

12. Apparatus claimed in one of claims 1 to 11, **characterised in that** in addition to the transport frame (7), a static frame (5) is provided, on which the pallets (1, 2) may be placed during movement of the transport frame opposite to the transport direction of the pallets (1, 2).

13. Apparatus claimed in claim 12, **characterised in that** a pallet guide (6) is provided on the static frame (5).

14. Apparatus claimed in one of claims 1 to 13, **characterised in that** a roller body of a pivotal link (10) engages the transport frame (7) for lowering and raising the transport frame (7).

## Revendications

1. Dispositif de transport et de secouage de blocs (3) en appui sur des palettes (1, 2) ou corps d'appui similaires, en particulier de blocs de pierre, avec un poste de secouage (R) présentant une table secoueuse (18), avec un convoyeur d'amenée (Z) disposé en amont du poste de secouage (R) dans le sens de transport (T) des blocs (3) et un convoyeur d'évacuation (A) disposé en aval du poste de secouage (R) dans le sens de transport (T) des blocs (3), sachant que le convoyeur d'amenée (Z) et le convoyeur d'évacuation (A) présentent chacun un cadre de transport (7) levable et abaissable, mobile alternativement en translation par respectivement un entraînement (20) pour la suite du transport des palettes (1, 2), **caractérisé en ce que** les entraînements (20) des cadres de transport (7) du convoyeur d'amenée (Z) et du convoyeur d'évacuation (A) peuvent être réglés à une même dimension de trame de cadre de transport et une dimension de trame de cadre de transport dans un rapport de 2:1 l'un par rapport à l'autre et **en ce qu'**une tablette (4, 4.1) augmentant sa surface de pose pour une palette (1, 2) avec une surface de pose s'alignant au moins à peu près avec la surface de la table secoueuse peut être prévu sur le cadre de transport (7) du convoyeur d'évacuation (A) dans sa zone contiguë au poste de secouage (R).

2. Dispositif selon la revendication 1, **caractérisé en ce que** l'entraînement (20) du cadre de transport (7) du convoyeur d'amenée (Z) peut être réglé à une dimension de trame de cadre de transport de 2 700 mm, alors que l'entraînement (20) du cadre de transport (7) du convoyeur d'évacuation (A) peut être réglé à une dimension de trame de cadre de transport de 1 350 mm.

3. Dispositif selon la revendication 1 ou 2, **caractérisé en ce que** la tablette (4) est prévue sur le cadre de transport (7) du convoyeur d'évacuation (A) de manière à pouvoir être démontée et peut être montée en particulier pour la dimension de trame de transport de 1 350 mm dans la position de pose suivante pour la palette.

4. Dispositif selon l'une quelconque des revendications 1 à 4, **caractérisé en ce que** la tablette (4) est réalisée en deux ou plusieurs parties et comporte un dispositif de levage (4.1).

5. Dispositif selon la revendication 4, **caractérisé en ce que** le dispositif de levage (4.1) présente des vérins de levage.

6. Dispositif selon l'une quelconque des revendications 1 à 5, **caractérisé en ce que** les cadres de transport (7) du convoyeur d'amenée (Z) et du convoyeur d'évacuation (A) peuvent être entraînés par leurs entraînements (20) en continu et/ou indépendamment l'un de l'autre.

7. Dispositif selon l'une quelconque des revendications 1 à 6, **caractérisé en ce que** les cadres de transport (7) du convoyeur d'amenée (Z) et du convoyeur d'évacuation (A) peuvent être levés et abaissés indépendamment l'un de l'autre.

8. Dispositif selon l'une quelconque des revendications 1 à 7, **caractérisé en ce que** le cadre de transport (7) du convoyeur d'amenée (Z) et le cadre de transport du convoyeur d'évacuation (A) peuvent être levés et abaissés par des bielles oscillantes (10) en appui de manière mobile en pivotement sur un châssis principal du dispositif.

9. Dispositif selon la revendication 8, **caractérisé en ce que** les bielles oscillantes (10) peuvent être transférées par au moins un vérin de levage (12) dans différentes positions de pivotement.

10. Dispositif selon l'une quelconque des revendications 1 à 9, **caractérisé en ce qu'**au moins un dispositif d'amenée destiné à l'agencement intermédiaire d'une tôle à emboutir (13) entre deux palettes (1, 2) placées l'une sur l'autre, est associé au convoyeur d'évacuation (A).

11. Dispositif selon la revendication 10, **caractérisé en ce que** le dispositif d'amenée présente un chariot (14), un guidage de chariot (15) et un vérin de levage (16).

12. Dispositif selon l'une quelconque des revendications 1 à 11, **caractérisé en ce qu'**un cadre statique (5), sur lequel les palettes (1, 2) peuvent être déposées pendant un mouvement des cadres de transport (7) dans le sens inverse du sens de transport des palettes (1, 2), est prévu à côté du cadre de transport (7).

13. Dispositif selon la revendication 12, **caractérisé en ce qu'**un guidage de palette (6) est prévu sur le cadre statique (5).

14. Dispositif selon l'une quelconque des revendications 1 à 13, **caractérisé en ce qu'**un corps de roulement d'une bielle oscillante (10) agit sur le cadre de transport (7) pour abaisser et lever le cadre de transport (7).
